# EUROPÄISCHE PATENTSCHRIFT

(11) **EP 3 379 871 B1**
(45) Veröffentlichungstag und Bekanntmachung des Hinweises auf die Patenterteilung: **09.10.2019**
(21) Anmeldenummer: 18161194.8
(22) Anmeldetag: 12.03.2018
(51) Int. Cl.: H04W 64/00, H04W 52/14, H04W 52/24, H04W 52/28, H04W 52/02, H04W 84/12, H04L 12/28

(54) **VERFAHREN ZUR AUSWAHL WENIGSTENS EINER ERSTEN SLAVE-EINHEIT INNERHALB EINER VORBESTIMMTEN RÄUMLICHEN NÄHE ZU EINER MASTER-EINHEIT**
METHOD FOR SELECTION OF AT LEAST A FIRST SLAVE UNIT WITHIN A PREDETERMINED SPATIAL PROXIMITY TO A MASTER UNIT
PROCÉDÉ DE SÉLECTION D'AU MOINS UNE PREMIÈRE UNITÉ ESCLAVE À L'INTÉRIEUR D'UNE ZONE PRÉDÉTERMINÉE PROCHE D'UNE UNITÉ MAÎTRE

(30) Priorität: 23.03.2017 DE 102017106290
(43) Veröffentlichungstag der Anmeldung: 26.09.2018
(73) Patentinhaber: Miele & Cie. KG, 33332 Gütersloh (DE)
(72) Erfinder: Dirks, Max, 59302 Oelde (DE); Langhammer, Nils, 33415 Verl (DE)

(56) Entgegenhaltungen:
- EP-A1- 3 264 714
- WO-A1-2004/014096
- WO-A1-2015/043649
- DE-A1-102009 041 821
- US-A1- 2009 010 230
- US-A1- 2014 167 931

## Beschreibung

Die Erfindung betrifft ein Verfahren zur Auswahl wenigstens einer ersten Slave-Einheit innerhalb einer vorbestimmten räumlichen Nähe zu einer Master-Einheit gemäß Patentanspruch 1, ein Netzwerk zur Ausführung eines derartigen Verfahrens gemäß Patentanspruch 10.

Aus der US 2014/167931 A1 sind ein Verfahren und ein Gerät zur Fernsteuerung in einem Heimnetzwerksystem mit mehreren Heimgeräten bekannt.

Aus der WO 2004/014096 A1 ist ein System zum Lokalisieren eines Mobilgeräts mittels eines drahtlosen lokalen Netzwerks bekannt.

Aus der DE 10 2009 041812 A1 ist ein Netzwerk bekannt, das mehrere Teilnehmer und eine Nachrichtenübertragungseinrichtung zum Übertragen von Nachrichten zwischen den Teilnehmern umfasst.

Aus der WO 2015/043649 A1 ist ein Verfahren zum ferngesteuerten Verbinden eines Haushaltsgeräts mit einem drahtlosen lokalen Netzwerk in einer sicheren Weise bekannt.

Aus der US 2009/010230 A1 ist ein automatisches drahtloses Verbindungsverfahren bekannt.Zur Erhöhung des Bedienkomforts geht in vielen Bereichen des Lebens der Trend dahin, technische Geräte anstelle über manuelle Eingaben wie z.B. über eine Tastatur, ein Touch-Display, eine Maus und dergleichen mittels Spracheingabe zu steuern. Dies betrifft neben der Interaktion mit einem heimischen oder beruflichen Computer, einem Smartphone, einem Tablet oder einem Auto zunehmend auch andere Bereiche des Alltags wie z.B. den Haushalt. Ziel ist es hierbei, Bedieneingaben für Haushaltsgeräte wie z.B. für Küchengeräte wie z.B. für eine Kochstelle eines Kochfeldes mit der Sprache vornehmen zu können anstelle hierzu mit der Hand eine Bedieneingabe oder eine andere Betätigung des Kochfeldes ausführen zu müssen. Dies gilt ebenso z.B. für eine Waschmaschine, für einen Wäschetrockner, für einen Staubsauger oder für andere elektronische Haushaltsgeräte.

Die Bedienung von Haushaltsgeräten über die Sprache kann für den Benutzer komfortabler sein, weil die Hände nicht für die Bedieneingabe verwendet werden müssen. So kann beispielsweise ein Kochtopf mit beiden Händen auf eine Kochstelle gestellt und gleichzeitig über die Stimme die Kochstelle aktiviert und eingestellt werden. Ebenso kann die Trommel einer Waschmaschine oder eines Wäschetrockners mit den Händen befüllt und gleichzeitig über die Stimme das Wasch- bzw. Trocknungsprogramm eingestellt werden. Hierdurch kann auch Zeit eingespart werden.

Die zur Umsetzung einer derartigen Sprachsteuerung erforderlichen Komponenten können dabei unterschiedlich ausfallen. Beispielsweise kann für ein in sich geschlossenes Haushaltsgerät wie z.B. eine Waschmaschine, einen Wäschetrockner, einen Staubsauger oder dergleichen eine Empfängereinheit der menschlichen Sprache an dem Haushaltsgerät selbst vorgesehen und mit der Steuerung des Haushaltsgeräts durch einer interne Verkabelung verbunden sein, so dass die gesprochene Bedieneingabe von dem Haushaltsgerät empfangen, verarbeitet und ausgeführt werden kann.

Es kann jedoch z.B. in einer Küche vorgesehen sein, dass eine zentrale Sprachsteuerungseinheit die gesprochenen Bedieneingaben des Benutzers zentral empfangen und je nach Bedieneingabe die einzelnen Küchengeräte ansteuern kann. Hierdurch kann darauf verzichtet werden, jedes Küchengerät mit einer Empfängereinheit der menschlichen Sprache auszustatten sowie auszubilden zu müssen, gesprochene Bedieneingaben zu verstehen. Dies kann den Aufwand der Umsetzung der Sprachsteuerung z.B. in einer Küche reduzieren. Auch kann es bei Küchengeräten wie z.B. einem Kochtopf, einem Wasserkocher und dergleichen vergleichsweise aufwendig sein, diese selbst mit einer Funktion zur Sprachsteuerung ausstatten zu müssen. Dies gilt auch für den Platzbedarf, den wenigstens eine Empfängereinheit der menschlichen Sprache verursachen kann. Auch kann durch eine zentrale Sprachsteuerungseinheit eine Koordinierung der einzelnen Küchengeräte untereinander erfolgen.

Ist ein Bereich eines Haushalts wie z.B. eine Küche vorhanden, in dem verschiedene Haushaltsgeräte von einem Benutzer über eine gemeinsame Sprachsteuerungseinheit sprachgesteuert werden können, so ist hierbei jedoch zu beachten, dass die Bedienung eines Haushaltsgeräts mittels Sprache eine Fernwirkung darstellen kann, d.h. eine Steuerung eines Gerätes durch einen Befehl, der außerhalb der Sichtweite eines Geräts vorgenommen werden kann. Somit kann zwischen dem Benutzer und dem Haushaltsgerät über die zentrale Sprachsteuerungseinheit eine Kommunikation und damit verbunden eine einseitige Beeinflussung stattfinden, auch wenn sich das Haushaltsgerät gar nicht in dem Raum mit der Sprachsteuerungseinheit befindet. Da dies die Sicherheit des Benutzer gefährden kann, sind derartige Fernwirkungen im Haushalt gemäß der Norm DIN EN 60335-01 (VDE 0700-1) zu unterbinden. Die Sprachsteuerung von Haushaltsgeräten durch den Benutzer könnte somit nicht normgerecht sein, was ihren Einsatz verhindern kann.

Um z.B. die zuvor beschriebene Fernwirkung auf Haushaltsgeräte auszuschließen muss somit vor der Bedienung eines Haushaltsgeräts sichergestellt werden, dass sich das mittels Spracheingabe zu bedienende Haushaltsgerät in demselben Raum wie die Sprachsteuerungseinheit bzw. innerhalb einer vorbestimmten räumlichen Nähe zu der Sprachsteuerungseinheit befindet. Ansonsten muss eine Bedienung über Spracheingabe ausgeschlossen oder zumindest derart eingeschränkt werden, dass die Sicherheit des Benutzers, anderer Personen sowie des Haushalts gewährleistet werden kann.

Der Erfindung stellt sich somit das Problem, ein Verfahren zur Auswahl wenigstens einer ersten Slave-Einheit wie z.B. eines ersten Haushaltsgeräts innerhalb einer vorbestimmten räumlichen Nähe zu einer Master-Einheit wie z.B. zu einer Sprachsteuerungseinheit, einem Tablet-Computer oder einem Smartphone zur Verfügung zu stellen. Zumindest soll ein alternatives Verfahren bereitgestellt werden.

Erfindungsgemäß wird dieses Problem durch ein Verfahren mit den Merkmalen des Patentanspruchs 1 und durch ein Netzwerk mit den Merkmalen des Patentanspruchs 10 gelöst. Vorteilhafte Ausgestaltungen und Weiterbildungen der Erfindung ergeben sich aus den nachfolgenden Unteransprüchen.

Die vorliegende Erfindung betrifft somit ein Verfahren zur Auswahl wenigstens einer ersten Slave-Einheit innerhalb einer vorbestimmten räumlichen Nähe zu einer Master-Einheit. Die wenigstens erste Slave-Einheit, eine zweite Slave-Einheit und die Master-Einheit sind ausgebildet, jeweils zwischen der Slave-Einheit und der Master-Einheit eine drahtlose Kommunikationsverbindung auszuführen. Vorzugsweise ist die erste Slave-Einheit ein erstes Haushaltsgerät, die zweite Slave-Einheit ist ein zweites Haushaltsgerät und die Master-Einheit ist eine Sprachsteuerungseinheit zur sprachgesteuerten Bedienung wenigstens des ersten Haushaltsgeräts. Alternativ kann die Master-Einheit auch ein Tablet-Computer oder ein Smartphone sein.

Das erfindungsgemäße Verfahren weist wenigstens die Schritte auf:
- jeweils Aussenden eines Signals von der ersten Slave-Einheit und von der zweiten Slave-Einheit über eine jeweilige drahtlose Kommunikationsverbindung direkt an die Master-Einheit,
- Empfangen des Signals der ersten Slave-Einheit durch die Master-Einheit, und
- Auswählen der ersten Slave-Einheit aus den Slave-Einheiten durch die Master-Einheit,
wobei das Aussenden des Signals durch die Slave-Einheiten jeweils mit einer vorbestimmten maximalen Signalleistung erfolgt, welche ausgelegt ist, so dass das ausgesendete Signal von der Master-Einheit lediglich dann empfangen werden kann, falls sich die aussendende Slave-Einheit innerhalb der vorbestimmten räumlichen Nähe zu der Master-Einheit befindet.

Der vorliegenden Erfindung liegt dabei die Erkenntnis zugrunde, dass die Reichweite einer drahtlosen Kommunikation von der Sendeleistung des Senders abhängt. Wird somit die Sendeleistung eines Senders begrenzt, kann das ausgesendete Signal auch nur innerhalb der entsprechenden Reichweite empfangen werden. Auf diese Weise kann erfindungsgemäß im Umkehrschluss seitens der Master-Einheit getestet werden, welche Slave-Einheiten sich innerhalb einer vorbestimmten räumlichen Nähe zur Master-Einheit befinden, weil nur deren ausgesendeten Signale überhaupt von der Master-Einheit empfangen werden können. Wird somit ein ausgesendetes Signal einer Slave-Einheit von der Master-Einheit empfangen, kann hieraus geschlussfolgert werden, dass sich diese Slave-Einheit innerhalb der vorbestimmten räumlichen Nähe befindet. Wird andererseits ein ausgesendetes Signal einer anderen Slave-Einheit nicht von der Master-Einheit empfangen, kann hieraus geschlussfolgert werden, dass sich diese andere Slave-Einheit nicht innerhalb der vorbestimmten räumlichen Nähe befindet.

Hierdurch kann seitens der Master-Einheit eine Unterscheidung erfolgen, welche Slave-Einheiten sich innerhalb der vorbestimmten räumlichen Nähe befinden und welche nicht. Diese können unterschiedlich behandelt werden, wie weiter unter noch beschrieben werden wird.

Gemäß einem Aspekt der vorliegenden Erfindung weist das Verfahren die weiteren Schritte auf:
- Bestimmen der maximalen Sendeleistung für die erste Slave-Einheit und für die zweite Slave-Einheit durch die Master-Einheit, und
- Übermitteln der vorbestimmten maximalen Sendeleistung von der Master-Einheit an die erste Slave-Einheit und an die zweite Slave-Einheit.

Auf diese Weise kann seitens der Master-Einheit den Slave-Einheiten vorgegeben werden, welche maximale Sendeleistung sie zur Aussendung des Signals jeweils zu verwenden haben, so dass die Master-Einheit den durchzuführenden Test bestimmen kann.

Gemäß der vorliegenden Erfindung weist das Verfahren den weiteren Schritt auf:
- Auffordern der ersten Slave-Einheit und der zweiten Slave-Einheit durch die Master-Einheit zum Aussenden des Signals mit der vorbestimmten maximalen Signalleistung.

Auf diese Weise kann seitens der Master-Einheit der Test initialisiert werden, so dass sich die Master-Einheit darauf einstellen kann, dass die folgenden Signale der Slave-Einheiten wie zuvor beschrieben zu bewerten sind.

Gemäß der vorliegenden Erfindung weist das Verfahren den weiteren Schritt auf:
- jeweils Erstellen eines Soft-Access Points durch die erste Slave-Einheit und durch die zweite Slave-Einheit mit der vorbestimmten maximalen Signalleistung vor dem Schritt des Aussendens des Signals.

Ein Soft-Access Point oder auch ein "software enabled access point" ist eine Funktion eines Geräts der drahtlosen Kommunikation, durch welche das Gerät als Router bzw. als "wireless access point" zur drahtlosen Kommunikation mit anderen Geräten betrieben werden kann. Auf diese Weise können die Slave-Einheiten eine eigene drahtlose Kommunikation durch Aussenden des Signals zur Master-Einheit umsetzen. Ferner kann hierdurch erreicht werden, dass jede Slave-Einheit ihre Sendeleistung selbst bestimmen kann, um das Aussenden des Signals mit der vorbestimmten maximalen Signalleistung ausführen zu können.

Gemäß der vorliegenden Erfindung weist das Verfahren den weiteren Schritt auf:
- Abmelden der ersten Slave-Einheit und der zweiten Slave-Einheit aus einem Netzwerk vor dem Schritt des Erstellens des Soft-Access Points.

Auf diese Weise können die Slave-Einheiten eine bestehende drahtlose Kommunikationsverbindung trennen und ein bestehendes Netzwerk verlassen, um danach als Soft-Access Point betrieben werden zu können.

Gemäß der vorliegenden Erfindung weist das Verfahren den weiteren Schritt auf:
- Beenden des jeweiligen Soft-Access Points durch die erste Slave-Einheit und durch die zweite Slave-Einheit, vorzugsweise nach Ablauf einer vorbestimmten Zeitdauer oder nach Aufforderung durch die Master-Einheit, nach dem Schritt des Aussendens des Signals.

Da die Funktion als Soft-Access Point der Slave-Einheiten lediglich für das Aussenden des Signals mit der vorbestimmten maximalen Signalleistung erforderlich ist, kann diese Funktion nach dem erfolgten Aussenden wieder beendet werden, da sie ihren Zweck erfüllt hat.

Dies kann vorzugsweise nach dem Ablauf einer vorbestimmten Zeitdauer erfolgen, was eine einfache Umsetzung des Beendens sein kann, welche jeweils selbsttätig durch die Slave-Einheiten ausgeführt werden kann. Beispielsweise können einige Sekunden ausreichend sein, um einen Soft-Access Point aufzubauen, das Signal auszusenden und den Soft-Access Point wieder zu schließen. Hierdurch werden die Slave-Einheiten nicht länger als erforderlich für den Test durch die Master-Einheit beansprucht.

Alternativ kann vorzugsweise auch auf Aufforderung der Master-Einheit die Funktion als Soft-Access Point beendet werden. Dies erfordert zwar einen Datenaustausch von der Master-Einheit an die Slave-Einheiten, kann jedoch andererseits dafür sorgen, dass die Funktion des Soft-Access Points bzw. das Aussenden des Signals erst dann beendet wird, wenn die Master-Einheit die Auswahl der Slave-Einheiten innerhalb der vorbestimmten Nähe erfolgreich durchgeführt hat.

Gemäß der vorliegenden Erfindung weist das Verfahren den weiteren Schritt auf:
- erneutes selbsttätiges Anmelden der ersten Slave-Einheit und der zweiten Slave-Einheit in einem Netzwerk nach dem Schritt des Beendens des jeweiligen Soft-Access Points.

Hierdurch können die Slave-Einheiten wieder in das Netzwerk zurückkehren, nachdem der Test durch die Master-Einheit abgeschlossen wurde, und ihre eigentliche Funktion im Netzwerk ausüben.

Gemäß einem weiteren Aspekt der vorliegenden Erfindung weist das Verfahren den weiteren Schritt auf:
- Festlegen der räumlichen Nähe zu der Master-Einheit, innerhalb der sich die aussendende Slave-Einheit befinden muss, um durch die Master-Einheit ausgewählt zu werden, durch die Master-Einheit.

Auf diese Weise kann seitens der Master-Einheit die Reichweite vorgegeben werden, welche als räumliche Nähe betrachtet werden und als Grundlage zur Bestimmung der entsprechenden maximalen Sendeleistung dienen soll. Hierdurch kann auch diesbezüglich seitens der Master-Einheit der Test bestimmt werden.

Gemäß einem weiteren Aspekt der vorliegenden Erfindung weisen die erste Slave-Einheit und die zweite Slave-Einheit jeweils eine erste Adresse, vorzugsweise eine MAC-Adresse, auf, durch welche die Slave-Einheiten innerhalb eines Netzwerks eindeutig identifizierbar sind, wobei das Verfahren den weiteren Schritt aufweist:
- jeweils Erstellen einer zweiten Adresse der ersten Slave-Einheit und der zweiten Slave-Einheit durch die Slave-Einheiten basierend auf der jeweiligen ersten Adresse, vorzugsweise zusätzlich basierend auf einer Zufallszahl,
wobei das ausgesendete Signal der Slave-Einheiten die jeweilige zweite Adresse ist.

Auf diese Weise kann das Signal nicht nur aufgrund seiner Signalstärke, sondern auch aufgrund des ausgesendeten Inhalts genutzt werden, so dass gleichzeitig die zweite Adresse der jeweiligen Slave-Einheit von der Master-Einheit erhalten werden kann. Dabei kann die zweite Adresse der Slave-Einheit genutzt werden, die Slave-Einheit als in der vorbestimmten räumlichen Nähe der Master-Einheit befindlich zu identifizieren.

Gemäß einem weiteren Aspekt der vorliegenden Erfindung weist das Verfahren die weiteren Schritte auf:
- jeweils Erstellen eines Slave-Sprachschlüssels der ersten Slave-Einheit und der zweiten Slave-Einheit durch die Slave-Einheiten basierend auf der jeweiligen zweiten Adresse, und
- Erstellen des Slave-Sprachschlüssels der ersten Slave-Einheit durch die Master-Einheit basierend auf der empfangenen zweiten Adresse der ersten Slave-Einheit.

Auf diese Weise kann eine gesicherte Kommunikation zwischen der Slave-Einheit, welche als in der vorbestimmten räumlichen Nähe der Master-Einheit befindlich erkannt wurde, und der Master-Einheit über den gemeinsam zu verwendenden Slave-Sprachschlüssel stattfinden. Da dieser auf der zweiten Adresse der ersten Slave-Einheit beruht und diese zweite Adresse der ersten Slave-Einheit durch die Master-Einheit als Signal empfangen wurde, stehen der Master-Einheit bereits alle Informationen zur Verfügung, um den Slave-Sprachschlüssel identisch zu erstellen. Und da diese Information anderen Geräten innerhalb des Netzwerks bzw. in der Umgebung fehlt, können diese anderen Geräte nicht an der Kommunikation zwischen Master-Einheit und erster Slave-Einheit teilnehmen.

Gemäß einem weiteren Aspekt der vorliegenden Erfindung weist das Verfahren die weiteren Schritte auf:
- Erstellen eines Sprachsteuerungsschlüssels durch die Master-Einheit, und
- Übermitteln des Sprachsteuerungsschlüssels durch die Master-Einheit an die erste Slave-Einheit und an die zweite Slave-Einheit,
wobei das jeweilige Erstellen des Slave-Sprachschlüssels durch die Slave-Einheiten zusätzlich basierend auf dem Sprachsteuerungsschlüssel der Master-Einheit erfolgt und wobei das Erstellen des Slave-Sprachschlüssels der ersten Slave-Einheit durch die Master-Einheit zusätzlich basierend auf dem Sprachsteuerungsschlüssel der Master-Einheit erfolgt.

Hierdurch kann die Sicherheit der Kommunikation zwischen der Master-Einheit und der ersten Slave-Einheit weiter verbessert werden, indem der Slave-Sprachschlüssel zusätzlich auf dem Sprachsteuerungsschlüssel der Master-Einheit beruht, welche hierzu seitens der Master-Einheit erzeugt und den Slave-Einheiten mitgeteilt wurde. Somit können die Master-Einheit sowie die erste Slave-Einheit den Slave-Sprachschlüssel jeweils zusätzlich basierend auf dem Sprachsteuerungsschlüssel erstellen, so dass der Slave-Sprachschlüssel weiterhin identisch erstellt werden kann. Gleichzeitig können weitere Geräte selbst dann nicht an der Kommunikation zwischen Master-Einheit und erster Slave-Einheit teilnehmen, falls ihnen die zweite Adresse der ersten Slave-Einheit bekannt ist, weil nun hierzu zusätzlich die Kenntnis des Sprachsteuerungsschlüssels erforderlich ist, welche den übrigen Geräten fehlt.

Gemäß einem weiteren Aspekt der vorliegenden Erfindung weist das Verfahren den weiteren Schritt auf:
- Steuern der ersten Slave-Einheit durch die Master-Einheit, vorzugsweise basierend auf dem Slave-Sprachschlüssel der ersten Slave-Einheit, mit einem unterschiedlichen, vorzugsweise erweiterten, Funktionsumfang als die zweite Slave-Einheit.

Hierdurch kann seitens der Master-Einheit eine Unterscheidung zwischen den Slave-Einheiten, welche sich innerhalb der vorbestimmten räumlichen Nähe der Master-Einheit befinden, und den Slave-Einheiten, welche dies nicht tun, stattfinden. Somit können seitens der Master-Einheit lediglich die Slave-Einheiten überhaupt gesteuert werden, welche sich innerhalb der vorbestimmten räumlichen Nähe der Master-Einheit befinden. Alternativ können durch die Master-Einheit sowohl Slave-Einheiten innerhalb der vorbestimmten räumlichen Nähe der Master-Einheit als auch Slave-Einheiten außerhalb der vorbestimmten räumlichen Nähe der Master-Einheit gesteuert werden, jedoch können die Slave-Einheiten unterschiedlich behandelt werden. Beispielsweise können bei den Slave-Einheiten, welche sich innerhalb der vorbestimmten räumlichen Nähe der Master-Einheit befinden, mehr Funktionen bzw. umfangreichere und komplexere Funktionen zugelassen werden als bei den übrigen Slave-Einheiten.

Gemäß einem weiteren Aspekt der vorliegenden Erfindung ist die vorbestimmte Signalleistung für die erste Slave-Einheit und für die zweite Slave-Einheit gleich. Auf diese Weise kann sichergestellt werden, dass für beide Slave-Einheiten der gleiche räumliche Abstand zur Master-Einheit getestet wird.

Gemäß einem weiteren Aspekt der vorliegenden Erfindung erfolgen alle Schritte gemäß eines WLAN-Standards, wobei vorzugsweise der WLAN-Standard für die erste Slave-Einheit, für die zweite Slave-Einheit und für die Master-Einheit gleich ist. Auf diese Weise kann sichergestellt werden, dass alle beteiligten Einheiten über die erforderlichen Funktionen verfügen, um diese Schritte auszuführen. Ferner kann für diese Schritte auf vorbestimmte Funktionen zurückgegriffen werden, welche bereits vorhanden sind, so dass der Aufwand der Umsetzung dieser Schritte möglichst gering gehalten und gleichzeitig die Zuverlässigkeit der Schritte gewährleistet werden kann.

Dies ist insbesondere dann vorteilhaft, falls Einheiten von verschiedenen Herstellern verwendet werden, welche nicht aufeinander abgestimmt sein müssen. Gerade in diesem Fall kann über die Verwendung von standardisierten Funktionen ein Zusammenwirken der Einheiten gemäß der Schritte gewährleistet werden.

Die vorliegende Erfindung betrifft auch ein Netzwerk mit einer ersten Slave-Einheit, vorzugsweise einem ersten Haushaltsgerät, einer zweiten Slave-Einheit, vorzugsweise einem zweiten Haushaltsgerät, und einer Master-Einheit, vorzugsweise einer Sprachsteuerungseinheit, welche ausgebildet sind, jeweils zwischen der Slave-Einheit und der Master-Einheit eine drahtlose Kommunikationsverbindung auszuführen, und welche ferner ausgebildet sind, ein Verfahren wie zuvor beschrieben auszuführen. Hierdurch kann eine Umsetzung des zuvor beschriebenen Verfahrens erreicht werden, um dessen Eigenschaften und Vorteile nutzen zu können.

Ein Ausführungsbeispiel der Erfindung ist in den Zeichnungen rein schematisch dargestellt und wird nachfolgend näher beschrieben. Es zeigt
- Figur 1: eine schematische Darstellung eines Netzwerks zur Ausführung eines erfindungsgemäßen Verfahrens in einer ersten Situation;
- Figur 2: die schematische Darstellung der Figur 1 in einer zweiten Situation;
- Figur 3: die schematische Darstellung der Figur 1 in einer dritten Situation;
- Figur 4: die schematische Darstellung der Figur 1 in einer vierten Situation; und
- Figur 5: ein schematisches Ablaufdiagram des erfindungsgemäßen Verfahrens.

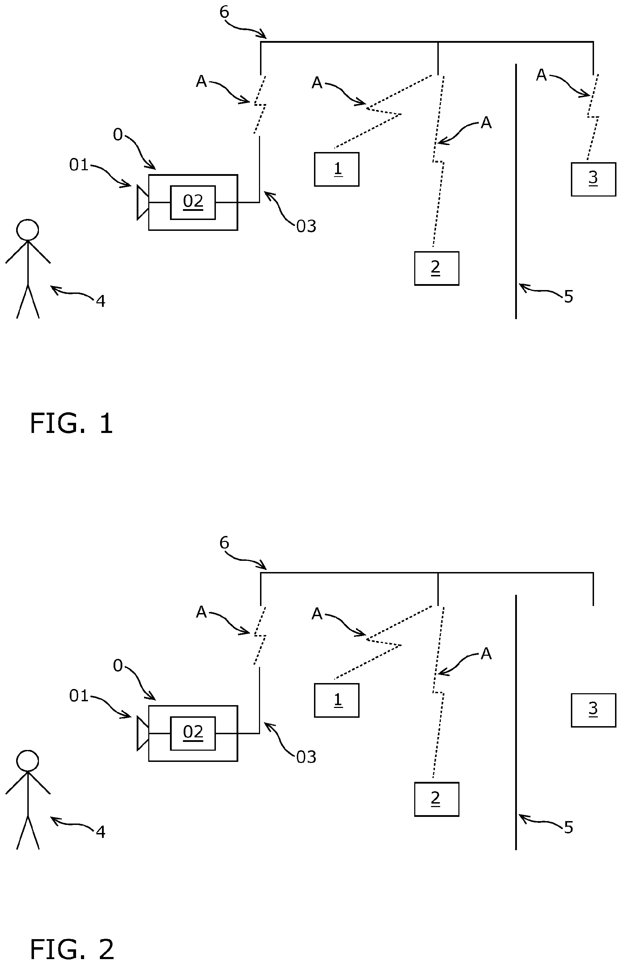

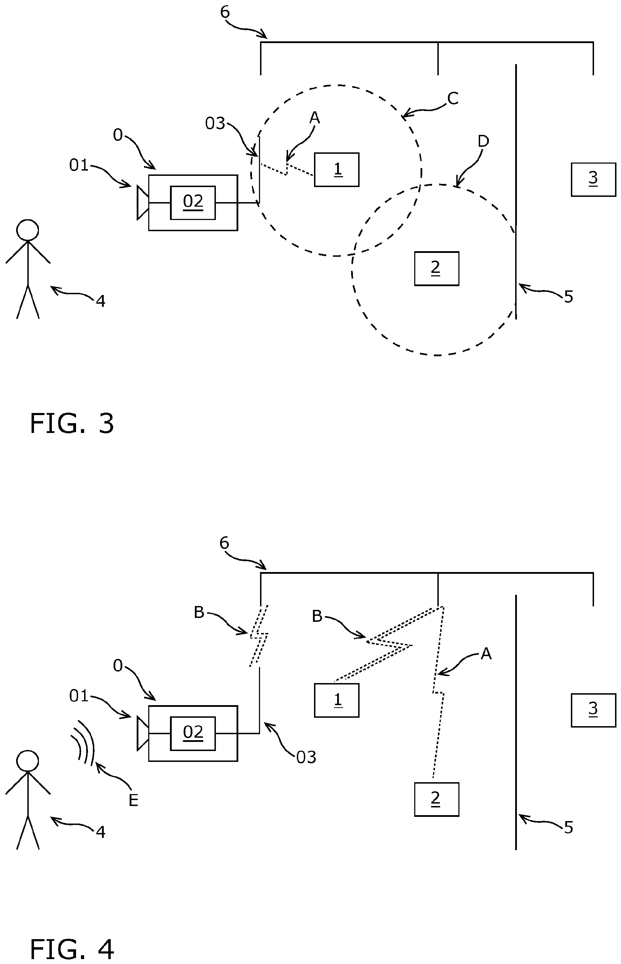

Das erfindungsgemäße Verfahren wird im Zusammenwirken verschiedener Teilnehmer innerhalb eines Haushalts betrachtet, siehe Figuren 1 bis 4. Es ist eine Master-Einheit 0 in Form einer Sprachsteuerungseinheit 0 vorhanden, welche z.B. die zentrale Sprachsteuerungseinheit 0 einer Küche des Haushalts sein kann. Alternativ kann die Master-Einheit 0 auch ein Tablet-Computer oder ein Smartphone sein. Die Sprachsteuerungseinheit 0 weist eine Empfängereinheit 01 in Form eines Mikrophons 01 auf, um eine gesprochene Bedieneingabe E von einem Benutzer 4 empfangen zu können, vgl. Figur 4. Die empfangene gesprochene Bedieneingabe E kann innerhalb der Sprachsteuerungseinheit 0 in einer Rechnereinheit 02 verarbeitet werden. Eine entsprechende Anweisung und andere Informationen sowie Anweisungen können seitens der Sprachsteuerungseinheit 0 über eine Sende-/Empfangseinheit 03 drahtlos ausgesendet und auch drahtlos empfangen werden.

Innerhalb der Küche sind ferner eine erste Slave-Einheit 1 in Form eines ersten Haushaltsgerätes 1 und eine zweite Slave-Einheit 2 in Form eines zweiten Haushaltsgeräts 2 vorhanden, welche ebenfalls zur drahtlosen Kommunikation in der Lage sind. Außerhalb der Küche jedoch innerhalb des Haushalts ist ferner eine dritte Slave-Einheit 3 in Form eines dritten Haushaltsgeräts 3 vorhanden, welches durch eine räumliche Trennung 5 in Form einer Wand 5 von den ersten beiden Haushaltsgeräten 1, 2 bzw. von der Küche räumlich getrennt und ebenfalls zur drahtlosen Kommunikation in der Lage ist.

Durch den Haushalt hindurch und über die Wand 5 hinweg erstreckt sich ein Netzwerk 6 in Form eines Heimnetzwerks 6, welches zur drahtlosen Kommunikation mit der Sprachsteuerungseinheit 0 sowie allen drei Haushaltsgeräten 1, 2, 3 in der Lage ist, siehe Figur 1.

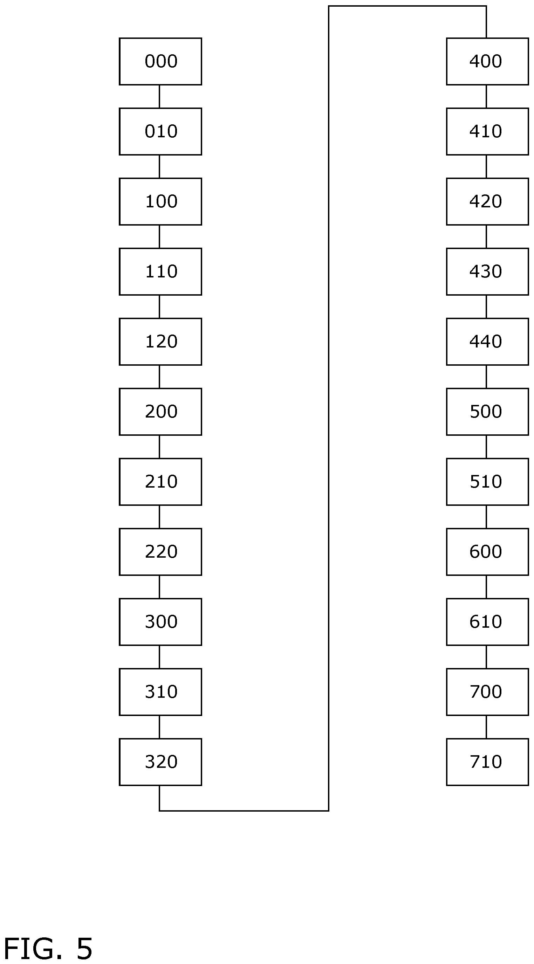

Innerhalb des zuvor beschriebenen Haushalts der Figuren 1 bis 4 kann ein erfindungsgemäßes Verfahren gemäß der Schritte der Figur 5 nun wie folgt beispielshaft ausgeführt werden:
Zuerst findet ein Anmelden 000 der Sprachsteuerungseinheit 0 im Heimnetzwerk 6 statt. Ebenso findet ein Anmelden 010 aller Haushaltsgeräte 1, 2, 3 im Heimnetzwerk 6 statt. Hierdurch wird jeweils eine drahtlose Kommunikationsverbindung A zwischen der Sprachsteuerungseinheit 0 bzw. einem der Haushaltsgeräte 1, 2, 3 und dem Heimnetzwerk 6 aufgebaut und eingerichtet, siehe Figur 1.

Anschließend wird ein Auffinden 100 der Haushaltsgeräte 1, 2, 3 im Heimnetzwerk 6 durch die Sprachsteuerungseinheit 0 ausgeführt. Dies kann z.B. durch Methoden der Device- und Service-Discovery wie z.B. per mDNS durchgeführt werden. Hierzu gehört auch ein jeweiliges Identifizieren 110 der Haushaltsgeräte 1, 2, 3 im Heimnetzwerk 6 durch eine jeweilige erste eindeutige Adresse wie z.B. durch ihre MAC-Adresse (Media-Access-Control-Adresse) durch die Sprachsteuerungseinheit 0. Auf diese Weise sind die Haushaltsgeräte 1, 2, 3 innerhalb des Heimnetzwerks 6 eindeutig identifizierbar. Danach findet ein Auswählen 120 des ersten Haushaltsgeräts 1 und des zweiten Haushaltsgeräts 2 aus allen Haushaltsgeräten 1, 2, 3 des Heimnetzwerks 6 durch die Sprachsteuerungseinheit 0 als relevant statt. In dem vorliegenden Fall ist dabei das Kriterium der Relevanz eines Haushaltsgeräts 1, 2, 3, ob dieses aufgrund seiner Funktion der Küche zugeordnet wird oder nicht, siehe Figur 2.

Nachdem diese allgemeinen vorbereitenden Schritte abgeschlossen sind, wird mit den konkreten Schritten des erfindungsgemäßen Verfahrens begonnen. So erfolgt durch die Sprachsteuerungseinheit 0 zunächst ein Festlegen 200 der räumlichen Nähe zu der Sprachsteuerungseinheit 0, innerhalb der sich ein aussendendes Haushaltsgerät 1, 2 befinden muss, um durch die Sprachsteuerungseinheit 0 ausgewählt zu werden. Anschließend erfolgt ein Bestimmen 210 der maximalen Sendeleistung für das erste Haushaltsgerät 1 und für das zweite Haushaltsgerät 2 durch die Sprachsteuerungseinheit 0. Die maximale Sendeleistung wird dabei für beide Haushaltsgeräte 1, 2 gleich festgelegt und ist derart berechnet, dass ein mit dieser vorbestimmten maximalen Sendeleistung ausgesendetes Signal der beiden Haushaltsgeräte 1, 2 nur dann von der Sprachsteuerungseinheit 0 empfangen werden kann, falls sich das Haushaltsgerät 1, 2 innerhalb der vorbestimmten räumlichen Nähe zur Sprachsteuerungseinheit 0 befindet. Ferner erfolgt durch die Sprachsteuerungseinheit 0 vorzugsweise ein Erstellen 220 eines Sprachsteuerungsschlüssels.

Nun sind seitens der Sprachsteuerungseinheit 0 alle vorbereitenden Maßnahmen getroffen, so dass der eigentliche Test begonnen werden kann, welche der relevanten Haushaltsgeräte 1, 2 innerhalb der vorbestimmten räumlichen Nähe liegen. Hierzu erfolgt zunächst ein Übermitteln 300 der vorbestimmten maximalen Sendeleistung von der Sprachsteuerungseinheit 0 an das erste Haushaltsgerät 1 und an das zweite Haushaltsgerät 2. Ferner erfolgt vorzugsweise ein Übermitteln 310 des Sprachsteuerungsschlüssels durch die Sprachsteuerungseinheit 0 an das erste Haushaltsgerät 1 und an das zweite Haushaltsgerät 2. Hierdurch werden alle relevanten Informationen für den Test seitens der Sprachsteuerungseinheit 0 definiert und den relevanten Haushaltsgeräten 1, 2 zur weiteren Verarbeitung zur Verfügung gestellt. Als nächstes erfolgt ein Auffordern 320 des ersten Haushaltsgeräts 1 und des zweiten Haushaltsgeräts 2 durch die Sprachsteuerungseinheit 0 zum Aussenden 440 eines Signals mit der vorbestimmten maximalen Signalleistung. Hiermit endet zunächst die Kommunikation von der Sprachsteuerungseinheit 0 an die relevanten Haushaltsgeräte 1, 2 über die drahtlose Kommunikationsverbindung A des Heimnetzwerks 6.

Die nächsten Schritte des erfindungsgemäßen Verfahrens werden nun durch die relevanten Haushaltsgeräte 1, 2 ausgeführt. Zuerst erfolgt ein Abmelden 400 des ersten Haushaltgeräts 1 und des zweiten Haushaltsgeräts 2 aus einem Heimnetzwerk 6. Hierdurch wird für die Dauer des Tests ein Betrieb jedes Haushaltsgeräts 1, 2 unabhängig vom Heimnetzwerk 6 eingeleitet. Dann erfolgt jeweils ein Erstellen 410 eines Soft-Access Points durch das erste Haushaltsgerät 1 und durch das zweite Haushaltsgerät 2 mit der vorbestimmten maximalen Signalleistung. Aufgrund der vorbestimmten maximalen Signalleistung, welche für alle relevanten Haushaltsgeräte 1, 2 gleich ist, kann auch die jeweilige maximale Reichweite C, D festgelegt werden, innerhalb der ein ausgesendetes Signal noch empfangen werden kann, siehe Figur 3.

Des Weiteren erfolgt jeweils ein Erstellen 420 einer zweiten Adresse des ersten Haushaltgeräts 1 und des zweiten Haushaltsgeräts 2 durch die relevanten Haushaltsgeräte 1, 2 basierend auf der jeweiligen ersten Adresse. Diese zweite Adresse kann eine SSID (Service Set Identification) sein. Hierdurch kann eine alternative eindeutige Identifizierung jedes relevanten Haushaltsgeräts 1, 2 erreicht werden, welche nun alternativ zur ersten Adresse zum Zwecke des Tests verwendet werden kann. Dabei wird die zweite Adresse vorzugsweise zusätzlich basierend auf einer Zufallszahl erstellt, um die Eindeutigkeit der zweiten Adresse sicherzustellen.

Ferner erfolgt jeweils ein Erstellen 430 eines Slave-Sprachschlüssels bzw. eines Haushaltsgeräte-Sprachschlüssels des ersten Haushaltgeräts 1 und des zweiten Haushaltsgeräts 2 durch die relevanten Haushaltsgeräte 1, 2 basierend auf der jeweiligen zweiten Adresse. Beispielsweise kann hierzu eine kryptographische Hash-Funktion SHA256 verwendet werden. Dies kann bereits alleine zu einer wirkungsvollen Verschlüsselung der zweiten Adresse führen. Vorzugsweise wird diese Verschlüsselung zusätzlich basierend auf dem Sprachsteuerungsschlüssel der Sprachsteuerungseinheit 0 ausgeführt, um den Verschlüsselungsalgorithmus weiter zu erhärten und es so anderen Geräten zu erschweren, den Haushaltsgeräte-Sprachschlüssel zu entschlüsseln.

Schließlich erfolgt jeweils ein Aussenden 440 eines Signals von dem ersten Haushaltsgerät 1 und von dem zweiten Haushaltsgerät 2 über eine jeweilige drahtlose Kommunikationsverbindung A direkt an die Sprachsteuerungseinheit 0. Als Signal wird die jeweilige zweite Adresse des Haushaltsgeräts 1, 2 verwendet. Das Aussenden 440 erfolgt für alle relevanten Haushaltsgeräte 1, 2 unabhängig voneinander und jeweils mit der gleichen vorbestimmten maximalen Sendeleistung. Hierdurch kommt erfindungsgemäß nur zwischen dem ersten Haushaltsgerät 1 und der Sprachsteuerungseinheit 0 die drahtlose Kommunikationsverbindung A zustande, weil sich die Sprachsteuerungseinheit 0 nur innerhalb der Reichweite C des ersten Haushaltsgeräts 1 befindet. Hieraus kann im Umkehrschluss geschlussfolgert werden, dass sich nur das erste Haushaltsgerät 1 in einer entsprechenden nahen räumlichen Nähe zur Sprachsteuerungseinheit 0 befindet, so dass die vorbestimmte maximale Sendeleistung ausreichend stark ist, um von der Sprachsteuerungseinheit 0 empfangen werden zu können. Die gleiche vorbestimmte maximale Sendeleistung ist für das zweite Haushaltsgerät 2 jedoch nicht ausreichend, um von der Sprachsteuerungseinheit 0 empfangen zu werden, da sich dieses weiter weg von der Sprachsteuerungseinheit 0 befindet und damit die Sprachsteuerungseinheit 0 außerhalb der Reichweite D des zweiten Haushaltsgeräts 2 liegt, siehe Figur 3.

Seitens der Sprachsteuerungseinheit 0 erfolgt somit ein Empfangen 500 nur des Signals des ersten Haushaltsgeräts 1. Anschließend erfolgt ein Erstellen 510 des Haushaltsgeräte-Sprachschlüssels des ersten Haushaltsgeräts 1 durch die Sprachsteuerungseinheit 0 basierend auf der empfangenen zweiten Adresse des ersten Haushaltsgeräts 1 und ggfs. zusätzlich basierend auf dem Sprachsteuerungsschlüssels der Sprachsteuerungseinheit 0.

Nun erfolgt vorzugsweise nach Ablauf einer vorbestimmten Zeitdauer von einigen Sekunden ein Beenden 600 des jeweiligen Soft-Access Points durch das erste Haushaltsgerät 1 und durch das zweite Haushaltsgerät 2. Ferner erfolgt ein erneutes selbsttätiges Anmelden 610 des ersten Haushaltsgeräts 1 und des zweiten Haushaltsgeräts 2 in dem Heimnetzwerk 6. Hierdurch kann die Ausgangssituation vor der Durchführung des Tests wiederhergestellt werden, so dass die Nutzung der relevanten Haushaltsgeräts 1, 2 durch den erfindungsgemäßen Test nur kurzzeitig unterbrochen werden muss, siehe Figur 4.

Hiermit kann der Test der Sprachsteuerungseinheit 0 als abgeschlossen angesehen werden, welches der relevanten Haushaltsgeräte 1, 2 sich zum aktuellen Zeitpunkt innerhalb der vorbestimmten räumlichen Nähe zur Sprachsteuerungseinheit 0 befindet. Im betrachteten Fall ist dies lediglich das erste Haushaltsgerät 1, was seitens der Sprachsteuerungseinheit 0 durch ein Auswählen 700 des ersten Haushaltsgeräts 1 aus den relevanten Haushaltsgeräts 1, 2 zur weiteren Nutzung gespeichert wird. Somit kann durch ein anschließendes Steuern 710 des ersten Haushaltsgeräts 1 durch die Sprachsteuerungseinheit 0 dieses mit einem anderen Funktionsumfang als des zweiten Haushaltsgeräts 2 betrieben werden, welches sich außerhalb der vorbestimmten räumlichen Nähe zur Sprachsteuerungseinheit 0 befindet. Dies kann basierend auf der zweiten Adresse und vorzugsweise basierend auf dem Haushaltsgeräte-Sprachschlüssel des ersten Haushaltsgeräts 1 erfolgen um sicherzustellen, dass das Steuern 710 über eine geschützte drahtlose Kommunikationsverbindung B ausschließlich gegenüber dem ersten Haushaltsgerät 1 erfolgt, siehe Figur 4. Hierzu vorzugsweise ausschließlich Funktionen eines WLAN-Standards zu verwenden kann dabei die Umsetzung des erfindungsgemäßen Verfahrens vereinfachen und gleichzeitig die Umsetzung auch unter Beteiligung von Haushaltsgeräten 1, 2 verschiedener Hersteller gewährleisten.

Auf diese Weise kann nun erfindungsgemäß eine Sprachsteuerung des ersten Haushaltsgeräts 1 über die Sprachsteuerungseinheit 0 durch gesprochene Bedienungsanweisungen E des Benutzers 4 sicher erfolgen und eine entsprechende Steuerung des zweiten Haushaltsgeräts 2 durch die Sprachsteuerungseinheit 0 kann ausgeschlossen oder eingeschränkt werden.

Vorzugsweise wird dieser Test regelmäßig wiederholt, um zu vermeiden, dass das erste Haushaltsgerät 1 aus der vorbestimmten räumlichen Nähe der Sprachsteuerungseinheit 0 entfernt wird, ohne dass dies erkannt wird. Hierzu wird die zweite Adresse und ggfs. der Haushaltsgeräte-Sprachschlüssel nicht dauerhaft in dem ersten Haushaltsgerät 1 und in der Sprachsteuerungseinheit 0 gespeichert, sondern z.B. durch ein Ausschalten gelöscht, so dass bei einem erneuten Betrieb des ersten Haushaltsgeräts 1 bzw. der Sprachsteuerungseinheit 0 der Test wiederholt werden muss. In diesem Fall werden dann auch eine neue zweite Adresse und damit auch ein neuer Haushaltsgeräte-Sprachschlüssel erstellt.

### Bezugszeichenliste (Bestandteil der Beschreibung)

- A: drahtlose Kommunikationsverbindungen
- B: geschützte drahtlose Kommunikationsverbindungen

- C: Reichweite der Sendeleistung der ersten Slave-Einheit 1
- D: Reichweite der Sendeleistung der zweiten Slave-Einheit 2

- E: gesprochene Bedieneingabe

- 0: Master-Einheit; Sprachsteuerungseinheit
- 01: Empfängereinheit der menschlichen Sprache; Mikrophon
- 02: Rechnereinheit; Datenverarbeitungseinheit
- 03: Sende-/Empfangseinheit zur drahtlosen Kommunikation

- 1: erste Slave-Einheit; erstes Haushaltsgerät
- 2: zweite Slave-Einheit; zweites Haushaltsgerät
- 3: dritte Slave-Einheit; drittes Haushaltsgerät

- 4: Benutzer

- 5: räumliche Trennung; Wand

- 6: (drahtloses) Netzwerk; (drahtloses) Heimnetzwerk

- 000: Anmelden der Master-Einheit 0 im Netzwerk 6
- 010: Anmelden 010 aller Slave-Einheiten 1, 2, 3 im Netzwerk 6
- 100: Auffinden der Slave-Einheiten 1, 2, 3 im Netzwerk 6 durch die Master-Einheit 0
- 110: jeweiliges Identifizieren der Slave-Einheiten 1, 2, 3 im Netzwerk 6
- 120: Auswählen der ersten Slave-Einheit 1 und der zweiten Slave-Einheit 2
- 200: Festlegen der räumlichen Nähe zu der Master-Einheit 0
- 210: Bestimmen der maximalen Sendeleistung für die erste Slave-Einheit 1 und für die zweite Slave-Einheit 2
- 220: Erstellen eines Sprachsteuerungsschlüssels durch die Master-Einheit 0
- 300: Übermitteln der vorbestimmten maximalen Sendeleistung von der Master-Einheit
- 310: Übermitteln des Sprachsteuerungsschlüssels an die erste Slave-Einheit 1 und an die zweite Slave-Einheit 2
- 320: Auffordern der ersten Slave-Einheit 1 und der zweiten Slave-Einheit 2 zum Aussenden 440 des Signals
- 400: Abmelden der ersten Slave-Einheit 1 und der zweiten Slave-Einheit 2 aus einem Netzwerk 6
- 410: jeweils Erstellen eines Soft-Access Points durch die erste Slave-Einheit 1 und durch die zweite Slave-Einheit 2
- 420: jeweils Erstellen einer zweiten Adresse der ersten Slave-Einheit 1 und der zweiten Slave-Einheit 2
- 430: jeweils Erstellen eines Slave-Sprachschlüssels der ersten Slave-Einheit 1 und der zweiten Slave-Einheit 2
- 440: jeweils Aussenden eines Signals von der ersten Slave-Einheit 1 und von der zweiten Slave-Einheit 2
- 500: Empfangen des Signals der ersten Slave-Einheit 1 durch die Master-Einheit 0
- 510: Erstellen des Slave-Sprachschlüssels der ersten Slave-Einheit 1 durch die Master-Einheit 0
- 600: Beenden des jeweiligen Soft-Access Points durch die erste Slave-Einheit 1 und durch die zweite Slave-Einheit 2
- 610: erneutes selbsttätiges Anmelden der ersten Slave-Einheit 1 und der zweiten Slave-Einheit 2 in einem Netzwerk 6
- 700: Auswählen der ersten Slave-Einheit
- 710: Steuern der ersten Slave-Einheit 1 durch die Master-Einheit 0

## Patentansprüche

1. Verfahren zur Auswahl wenigstens einer ersten Slave-Einheit (1), vorzugsweise eines ersten Haushaltsgeräts (1), innerhalb einer vorbestimmten räumlichen Nähe zu einer Master-Einheit (0), vorzugsweise zu einer Sprachsteuerungseinheit (0),
wobei wenigstens die erste Slave-Einheit (1), vorzugsweise das erste Haushaltsgerät (1), eine zweite Slave-Einheit (2), vorzugsweise ein zweites Haushaltsgerät (2), und die Master-Einheit (0) ausgebildet sind, jeweils zwischen der Slave-Einheit (1; 2) und der Master-Einheit (0) eine drahtlose Kommunikationsverbindung (A; B) auszuführen,
mit wenigstens den Schritten:
jeweils Aussenden (440) eines Signals von der ersten Slave-Einheit (1) und von der zweiten Slave-Einheit (2) über eine jeweilige drahtlose Kommunikationsverbindung (A) direkt an die Master-Einheit (0),
Empfangen (500) des Signals der ersten Slave-Einheit (1) durch die Master-Einheit (0), und
Auswählen (700) der ersten Slave-Einheit (1) aus den Slave-Einheiten (1, 2) durch die Master-Einheit (0),
wobei das Aussenden (440) des Signals durch die Slave-Einheiten (1, 2) jeweils mit einer vorbestimmten maximalen Signalleistung erfolgt, welche ausgelegt ist, so dass das ausgesendete Signal von der Master-Einheit (0) lediglich dann empfangen werden kann, falls sich die aussendende Slave-Einheit (1, 2) innerhalb der vorbestimmten räumlichen Nähe zu der Master-Einheit (0) befindet; wobei alle Schritte gemäß einem WLAN-Standards erfolgen,
**gekennzeichnet durch** die weiteren Schritte:
Auffordern (320) der ersten Slave-Einheit (1) und der zweiten Slave-Einheit (2) durch die Master-Einheit (0) zum Aussenden (440) des Signals mit der vorbestimmten maximalen Signalleistung;
jeweils Erstellen (410) eines Soft-Access Points durch die erste Slave-Einheit (1) und durch die zweite Slave-Einheit (2) mit der vorbestimmten maximalen Signalleistung vor dem Schritt des Aussendens (440) des Signals;
Abmelden (400) der ersten Slave-Einheit (1) und der zweiten Slave-Einheit (2) aus einem Netzwerk (6) vor dem Schritt des Erstellens (410) des Soft-Access Points;
Beenden (600) des jeweiligen Soft-Access Points durch die erste Slave-Einheit (1) und durch die zweite Slave-Einheit (2), nach Ablauf einer vorbestimmten Zeitdauer oder nach Aufforderung durch die Master-Einheit (0), nach dem Schritt des Aussendens (440) des Signals; und
erneutes selbsttätiges Anmelden (610) der ersten Slave-Einheit (1) und der zweiten Slave-Einheit (2) in einem Netzwerk (6) nach dem Schritt des Beendens (600) des jeweiligen Soft-Access Points.

2. Verfahren nach Anspruch 1, **gekennzeichnet durch** die weiteren Schritte:
Bestimmen (210) der maximalen Sendeleistung für die erste Slave-Einheit (1) und für die zweite Slave-Einheit (2) durch die Master-Einheit (0), und
Übermitteln (300) der vorbestimmten maximalen Sendeleistung von der Master-Einheit (0) an die erste Slave-Einheit (1) und an die zweite Slave-Einheit (2).

3. Verfahren nach Anspruch 2, **gekennzeichnet durch** den weiteren Schritt:
Festlegen (200) der räumlichen Nähe zu der Master-Einheit (0), innerhalb der sich die aussendende Slave-Einheit (1, 2) befinden muss, um durch die Master-Einheit (0) ausgewählt zu werden, durch die Master-Einheit (0), wobei die festgelegte räumliche Nähe als Grundlage zur Bestimmung der vorbestimmten maximalen Sendeleistung dient.

4. Verfahren nach einem der vorherigen Ansprüche, **dadurch gekennzeichnet, dass**
die erste Slave-Einheit (1) und die zweite Slave-Einheit (2) jeweils eine erste Adresse, vorzugsweise eine MAC-Adresse, aufweisen, durch welche die Slave-Einheiten (1, 2) innerhalb eines Netzwerks (6) eindeutig identifizierbar sind,
mit dem weiteren Schritt:
jeweils Erstellen (420) einer zweiten Adresse der ersten Slave-Einheit (1) und der zweiten Slave-Einheit (2) durch die Slave-Einheiten (1, 2) basierend auf der jeweiligen ersten Adresse, vorzugsweise zusätzlich basierend auf einer Zufallszahl,
wobei das ausgesendete Signal der Slave-Einheiten (1, 2) die jeweilige zweite Adresse ist.

5. Verfahren nach Anspruch 4, **gekennzeichnet durch** die weiteren Schritte:
jeweils Erstellen (430) eines Slave-Sprachschlüssels der ersten Slave-Einheit (1) und der zweiten Slave-Einheit (2) durch die Slave-Einheiten (1, 2) basierend auf der jeweiligen zweiten Adresse, und
Erstellen (510) des Slave-Sprachschlüssels der ersten Slave-Einheit (1) durch die Master-Einheit (0) basierend auf der empfangenen zweiten Adresse der ersten Slave-Einheit (1).

6. Verfahren nach Anspruch 5, **gekennzeichnet durch** die weiteren Schritte:
Erstellen (220) eines Sprachsteuerungsschlüssels durch die Master-Einheit (0), und
Übermitteln (310) des Sprachsteuerungsschlüssels durch die Master-Einheit (0) an die erste Slave-Einheit (1) und an die zweite Slave-Einheit (2),
wobei das jeweilige Erstellen (430) des Slave-Sprachschlüssels durch die Slave-Einheiten (1, 2) zusätzlich basierend auf dem Sprachsteuerungsschlüssels der Master-Einheit (0) erfolgt, und
wobei das Erstellen (510) des Slave-Sprachschlüssels der ersten Slave-Einheit (1) durch die Master-Einheit (0) zusätzlich basierend auf dem Sprachsteuerungsschlüssels der Master-Einheit (0) erfolgt.

7. Verfahren nach einem der Ansprüche 5 oder 6, **gekennzeichnet durch** den weiteren Schritt:
Steuern (710) der ersten Slave-Einheit (1) durch die Master-Einheit (0), vorzugsweise basierend auf dem Slave-Sprachschlüssel der ersten Slave-Einheit (1), mit einem unterschiedlichen, vorzugsweise erweiterten, Funktionsumfang als die zweite Slave-Einheit (2).

8. Verfahren nach einem der vorherigen Ansprüche, **dadurch gekennzeichnet, dass**
die vorbestimmte Signalleistung für die erste Slave-Einheit (1) und für die zweite Slave-Einheit (2) gleich ist.

9. Verfahren nach einem der vorherigen Ansprüche, **dadurch gekennzeichnet, dass**
vorzugsweise der WLAN-Standard für die erste Slave-Einheit (1), für die zweite Slave-Einheit (2) und für die Master-Einheit (0) gleich ist.

10. Netzwerk (6), mit
einer ersten Slave-Einheit (1), vorzugsweise einem ersten Haushaltsgerät (1),
einer zweiten Slave-Einheit (2), vorzugsweise einem zweiten Haushaltsgerät (2), und
einer Master-Einheit (0), vorzugsweise einer Sprachsteuerungseinheit (0),
welche ausgebildet sind, jeweils zwischen der Slave-Einheit (1; 2) und der Master-Einheit (0) eine drahtlose Kommunikationsverbindung (A; B) auszuführen, und
welche ferner ausgebildet sind, ein Verfahren nach einem der Ansprüche 1 bis 9 auszuführen.

## Claims

1. Method for selecting at least one first slave unit (1), preferably a first domestic appliance (1), within a predetermined spatial proximity to a master unit (0), preferably to a voice control unit (0), at least the first slave unit (1), preferably the first domestic appliance (1), a second slave unit (2), preferably a second domestic appliance (2), and the master unit (0) each being configured to implement a wireless communication link (A; B) between the slave unit (1, 2) and the master unit (0), comprising at least the steps of:
transmitting (440) a signal from the first slave unit (1) and from the second slave unit (2) via a particular wireless communication link (A) directly to the master unit (0), receiving (500) the signal from the first slave unit (1) by means of the master unit (0), and selecting (700) the first slave unit (1) from the slave units (1, 2) by means of the master unit (0), the transmission (440) of the signal being carried out by means of the slave units (1, 2) in each case at a predetermined maximum signal power, which is designed such that the transmitted signal can be received by the master unit (0) only if the transmitting slave unit (1, 2) is within the predetermined spatial proximity to the master unit (0);
all steps being carried out according to a WLAN standard,
**characterised by** the additional steps of:
prompting (320) the first slave unit (1) and the second slave unit (2) by means of the master unit (0) to transmit (440) the signal at the predetermined maximum signal power;
creating (410) a soft access point by means of the first slave unit (1) and by means of the second slave unit (2) at the predetermined maximum signal power prior to the step of transmitting (440) the signal;
logging out (400), by the first slave unit (1) and by the second slave unit (2), from a network (6) prior to the step of creating (410) the soft access point;
stopping (600) the particular soft access point by means of the first slave unit (1) and by means of the second slave unit (2), after a predetermined period of time has elapsed or when prompted by the master unit (0), after the step of transmitting (440) the signal; and
renewed automatic login (610) of the first slave unit (1) and of the second slave unit (2) into a network (6) after the step of stopping (600) the particular soft access point.

2. Method according to claim 1, **characterised by** the additional steps of:
determining (210), by means of the master unit (0), the maximum transmitting power for the first slave unit (1) and for the second slave unit (2), and transmitting (300) the predetermined maximum transmitting power from the master unit (0) to the first slave unit (1) and to the second slave unit (2).

3. Method according to claim 2, **characterised by** the additional step of:
ascertaining (200), by means of the master unit (0), the spatial proximity to the master unit (0) within which the transmitting slave unit (1, 2) must be located in order to be selected by the master unit (0), the ascertained spatial proximity serving as the basis for determining the predetermined maximum transmitting power.

4. Method according to any of the preceding claims, **characterised in that** the first slave unit (1) and the second slave unit (2) each have a first address, preferably a MAC address, by which the slave units (1, 2) are uniquely identifiable within a network (6), comprising the additional step of:
creating (420) a second address of the first slave unit (1) and of the second slave unit (2) by means of the slave units (1, 2), respectively, based on the particular first address, preferably additionally based on a random number, the transmitted signal from the slave units (1, 2) being the particular second address.

5. Method according to claim 4, **characterised by** the additional steps of:
creating (430) a slave voice key of the first slave unit (1) and of the second slave unit (2) by means of the slave units (1, 2), respectively, based on the particular second address, and creating (510) the slave voice key of the first slave unit (1) by means of the master unit (0) based on the received second address of the first slave unit (1).

6. Method according to claim 5, **characterised by** the additional steps of:
creating (220) a voice control key by means of the master unit (0), and transmitting (310) the voice control key by means of the master unit (0) to the first slave unit (1) and to the second slave unit (2), the particular creation (430) of the slave voice key by means of the slave units (1, 2) additionally being carried out based on the voice control key of the master unit (0), and the creation (510) of the slave voice key of the first slave unit (1) by means of the master unit (0) additionally being carried out based on the voice control key of the master unit (0).

7. Method according to either claim 5 or claim 6, **characterised by** the additional step of:
controlling (710) the first slave unit (1) by means of the master unit (0), preferably based on the slave voice key of the first slave unit (1), so as to have a different, preferably extended, range of functions compared with the second slave unit (2).

8. Method according to any of the preceding claims, **characterised in that** the predetermined signal power is the same for the first slave unit (1) and for the second slave unit (2).

9. Method according to any of the preceding claims, **characterised in that** the WLAN standard is preferably the same for the first slave unit (1), for the second slave unit (2) and for the master unit (0).

10. Network (6) comprising a first slave unit (1), preferably a first domestic appliance (1), a second slave unit (2), preferably a second domestic appliance (2), and a master unit (0), preferably a voice control unit (0), each of which are configured to implement a wireless communication link (A; B) between the slave unit (1; 2) and the master unit (0), and which are further configured to carry out a method according to any of claims 1 to 9.

## Revendications

1. Procédé de sélection d'au moins une première unité esclave (1), de préférence un premier appareil ménager (1), dans un voisinage spatial prédéterminé d'une unité maître (0), de préférence une unité de commande vocale (0), dans lequel au moins la première unité esclave (1), de préférence le premier appareil ménager (1), une seconde unité esclave (2), de préférence un second appareil ménager (2) et l'unité maître (0) sont conçus pour établir une liaison de communication sans fil (A ; B) entre l'unité esclave (1 ; 2) et l'unité maître (0), comportant au moins les étapes :
d'émission (440), via une liaison de communication sans fil respective (A) directement à l'unité maître (0), d'un signal provenant de la première unité esclave (1) et de la seconde unité esclave (2), de réception (500), par l'unité maître (0), du signal provenant de la première unité esclave (1), et de sélection (700), par l'unité maître (0), de la première unité esclave (1) parmi lesdites unités esclaves (1,2), l'émission (440) du signal par les unités esclaves (1, 2) s'effectuant à une puissance de signal maximale prédéterminée, laquelle est prévue de sorte que le signal émis peut être reçu par l'unité maître (0) seulement si l'unité esclave émettrice (1, 2) se trouve dans le voisinage spatial prédéterminé de l'unité maître (0) ;
toutes les étapes étant effectuées conformément à une norme WLAN, **caractérisé par** les étapes supplémentaires :
d'incitation (320), par l'unité maître (0), de la première unité esclave (1) et de la seconde unité esclave (2) de façon à émettre (440) le signal avec la puissance de signal maximale prédéterminée ;
de création (410) d'un point d'accès Soft par la première unité esclave (1) et par la seconde unité esclave (2) avec la puissance de signal maximale prédéterminée, avant l'étape d'émission (440) du signal ;
de déconnexion (400) de la première unité esclave (1) et de la seconde unité esclave (2) d'un réseau (6) avant l'étape de création (410) du point d'accès Soft ;
de désactivation (600) du point d'accès Soft respectif par la première unité esclave (1) et par la seconde unité esclave (2) après une période de temps prédéterminée ou à demande de l'unité maître (0) après l'étape d'émission (440) du signal ; et
de reconnexion automatique (610) de la première unité esclave (1) et de la seconde unité esclave (2) à un réseau (6) après l'étape de désactivation (600) du point d'accès Soft respectif.

2. Procédé selon la revendication 1, **caractérisé par** les étapes supplémentaires :
de détermination (210), par l'unité maître (0), de la puissance d'émission maximale pour la première unité esclave (1) et pour la seconde unité esclave (2), et de transmission (300) de la puissance d'émission maximale prédéterminée de l'unité maître (0) vers la première unité esclave (1) et vers la seconde unité esclave (2).

3. Procédé selon la revendication 2, **caractérisé par** l'étape supplémentaire de :
détermination (200), par l'unité maître (0), du voisinage spatial de l'unité maître (0) dans lequel l'unité esclave émettrice (1, 2) doit se trouver pour être sélectionnée par l'unité maître (0), le voisinage spatial déterminé servant de base pour la détermination de la puissance d'émission maximale prédéterminée.

4. Procédé selon l'une des revendications précédentes, **caractérisé en ce que** la première unité esclave (1) et la seconde unité esclave (2) ont chacune une première adresse, de préférence une adresse MAC, par laquelle les unités esclaves (1, 2) peuvent être identifiées de manière unique dans un réseau (6), comportant l'étape supplémentaire de :
création (420), par les unités esclaves (1, 2), d'une seconde adresse pour la première unité esclave (1) et pour la seconde unité esclave (2), sur la base de la première adresse respective, de préférence également sur la base d'un nombre aléatoire, le signal émis par les unités esclaves (1, 2) constituant la seconde adresse respective.

5. Procédé selon la revendication 4, **caractérisé par** les étapes supplémentaires de :
Création (430), par les unités esclaves (1, 2), d'une clé vocale esclave pour la première unité esclave (1) et pour la seconde unité esclave (2), sur la base de la seconde adresse respective, et de création (510), par l'unité maître (0) de la clé vocale esclave pour la première unité esclave (1), sur la base de la seconde adresse reçue de la première unité esclave (1).

6. Procédé selon la revendication 5, **caractérisé par** les étapes supplémentaires de :
création (220), par l'unité maître (0), d'une clé de commande vocale, et de transmission (310), par l'unité maître (0), de la clé de commande vocale à la première unité esclave (1) et à la seconde unité esclave (2), la création (430) de la clé vocale esclave par les unités esclaves (1, 2) s'effectuant en outre sur la base de la clé de commande vocale de l'unité maître (0), et la création (510), par l'unité maître (0), de la clé vocale esclave de la première unité esclave (1) s'effectuant en outre sur la base de la clé de commande vocale de l'unité maître (0).

7. Procédé selon l'une des revendications 5 ou 6, **caractérisé par** l'étape supplémentaire de :
commande (710) de la première unité esclave (1) par l'unité maître (0), de préférence sur la base de la clé vocale esclave de la première unité esclave (1), comprenant comme seconde unité esclave (2) des fonctionnalités différentes, de préférence étendues.

8. Procédé selon l'une des revendications précédentes, **caractérisé en ce que** la puissance de signal prédéterminée est la même pour la première unité esclave (1) et pour la seconde unité esclave (2).

9. Procédé selon l'une des revendications précédentes, **caractérisé en ce que** la norme WLAN est de préférence la même pour la première unité esclave (1), pour la seconde unité esclave (2) et pour l'unité maître (0).

10. Réseau (6) comprenant une première unité esclave (1), de préférence un premier appareil ménager (1), une seconde unité esclave (2), de préférence un second appareil ménager (2), et une unité maître (0), de préférence une unité de commande vocale (0), qui sont conçus pour établir une liaison de communication sans fil (A ; B) entre l'unité esclave (1 ; 2) et l'unité maître (0), et qui sont en outre conçus pour exécuter un procédé selon l'une des revendications 1 à 9.
